# EUROPÄISCHE PATENTANMELDUNG

(11) **EP 1 832 409 A2**
(43) Veröffentlichungstag der Anmeldung: **12.09.2007**
(21) Anmeldenummer: 07004334.4
(22) Anmeldetag: 02.03.2007
(51) Int. Cl.: B29C 53/08, B29C 49/42, B29K 77/00, B29L 23/00

(54) **Verfahren zur Herstellung eines thermoplastischen Kunstoffschlauches**

(30) Priorität: 06.03.2006 DE 102006010581
(71) Anmelder: GEPOC Verfahrenstechnik GmbH, 52399 Merzenich-Golzheim (DE)
(72) Erfinder: Cornils, Gerd, 52399 Merzenich (DE); Bischof, Thomas, 52074 Aachen (DE)
(74) Vertreter: Patentanwaltskanzlei Liermann-Castell

(57) **Zusammenfassung**

Bei einem Verfahren zur Herstellung eines thermoplastischen Polyamidschlauches wird der Schlauch (1) vorgewärmt, in eine Form (2) eingelegt, druckverformt und anschließend thermofixiert. Erfindungsgemäß wird der Schlauch auf circa 150 °C bis 190 °C vorgewärmt und mit einem Roboter in die Form eingelegt.

## Beschreibung

Die Erfindung betrifft ein Verfahren zur Herstellung eines thermoplastischen Kunststoffschlauches, bei dem der Schlauch vorgewärmt, in eine Form eingelegt, druckverformt und anschließend thermofixiert wird.

Derartige Verfahren eignen sich für ein- und mehrlagige Schläuche. Hierbei wird der hergestellte Schlauch, der meistens aus einem Polyamidmaterial besteht, zunächst so weit vorgewärmt, dass er flexibel genug ist, um in eine Form eingelegt werden zu können. Da der Schlauch per Hand eingelegt wird, wird er auf 60 °C bis 100 °C vorgewärmt. Dies gibt dem Schlauch eine ausreichend plastische Verformbarkeit, um ihn ordnungsgemäß auch in eine komplizierte Form einzulegen und der Schlauch behält dabei genügend Festigkeit, damit beim Einlegen des Schlauches in die Form die Schlauchform nicht beschädigt wird. Ein Knicken des Schlauches sollte unbedingt vermieden werden. Temperaturen über 100 °C müssen verhindert werden, da sich die Mitarbeiter sonst die Finger verbrennen würden und beim Einlegen des Schlauches in die Form der Schlauch Dellen erhält und sich beim Einlegen aneinandergedrückte Schlauchinnenseiten miteinander verkleben könnten.

Das bekannte Verfahren ist arbeitsaufwändig und es muss auf die Einstellung der optimalen Schlauchtemperatur geachtet werden, die es erlaubt, den Schlauch ausreichend flexibel zu halten, um ihn einfach in die Form zu legen, und andererseits eine Verformung des Schlauches beim Einlegen bis hin zur Verklebung der Schlauchinnenseiten verhindert.

Der Erfindung liegt die Aufgabe zugrunde, ein neues Verfahren zur Herstellung eines thermoplastischen Kunststoffschlaues vorzuschlagen, das einfach und kostengünstig durchführbar ist.

Diese Aufgabe wird bei einem gattungsgemäßen Verfahren dadurch gelöst, dass der Schlauch auf circa 150 °C bis 190 °C vorgewärmt wird und mit einem Roboter in die Form eingelegt wird.

Der Erfindung liegt die Erkenntnis zugrunde, dass die Kombination von Robotereinsatz und Temperaturerhöhung den Verfahrensablauf nicht erschwert sondern deutlich erleichtert. Die erhöhte Temperatur, die zu einer besonderen Flexibilität des Schlauches führt und ein manuelles Greifen und Einlegen des Schlauches erschwert, stellt in Verbindung mit dem Einsatz eines Roboters eine Verfahrenserleichterung dar, da der Roboter eine optimierbare und reproduzierbare Schlauchführung vornehmen kann, bei der eine extreme Schlauchflexibilität keinen Nachteil darstellt.

Bisher wurden für die Herstellung derartiger Schläuche Roboter nicht eingesetzt, da die Schläuche mit viel Geschick in die Form eingelegt werden mussten und hierzu ein Roboter ungeeignet ist. Erst die Kombination aus Temperaturerhöhung und Robotereinsatz führte zu dem erfindungsgemäßen Verfahren, das die Herstellung derartiger Schläuche deutlich vereinfacht.

Versuche haben gezeigt, dass der Schlauch vorzugsweise auf circa 170 °C vorgewärmt wird. Diese Temperaturangabe gilt insbesondere für einen Polyamidschlauch, der bei dieser Temperatur eine optimale Verformbarkeit aufweist, um leicht in eine Form eingelegt werden zu können, und andererseits nicht so flexibel ist, dass die Gefahr besteht, dass der Schlauch beim Einlegen beispielsweise durch Verkleben der Schlauchinnenseiten irreversibel verformt wird.

Die Vorwärmung beispielsweise auf 170 °C führt weiterhin zu dem Vorteil, dass die Thermofixierzeit deutlich verringert werden kann, da der Schlauch bereits auf 170 °C vorgewärmt ist. Das Verfahren wird somit nicht nur durch den Einsatz eines Roboters sondern auch durch die geänderte Verfahrensführung beschleunigt.

Eine vorteilhafte Ausführungsvariante sieht vor, dass der Schlauch mit einer Rolle in die Form eingelegt wird. Dies erlaubt es nicht nur, den Schlauch auf einfache Art und Weise zur Form zu transportieren, sondern ihn auch kontinuierlich in die Form einzupressen, ohne dass die Schlauchform beschädigt wird.

Es wird daher auch vorgeschlagen, dass der Schlauch mit einer oder mehreren Rollen geführt wird. Die Rollen können hierbei konkave Außenflächen aufweisen, mit denen der Schlauch vorsichtig gegriffen, geführt und in die Form eingelegt werden kann.

Je nach Anwendungsfall kann es auch vorteilhaft sein, den Schlauch zwischen einer Rolle und einem Gleitstein zu führen. Auch hierzu wird vorgeschlagen, dass die Rolle und/oder der Gleitstein eine konkave, an die Form des Schlauches angepasste Kontur aufweisen.

Eine vorteilhafte Ausführungsvariante sieht vor, dass der Schlauch beim Einlegen in die Form erwärmt wird. Dies ermöglicht es, direkt beim Einlegen des Schlauches die Temperatur noch etwas zu erhöhen oder auch erst beim Einlegen des Schlauches die optimale Temperatur zu erreichen.

Eine derartige Temperaturerhöhung kann über Strahlungsenergie, Induktion oder Ähnliches erreicht werden. Vorteilhaft ist es, wenn der Schlauch beim Einlegen in die Form mit Heißluft beaufschlagt wird. Der Luftstrom kann hierbei einerseits der Erwärmung dienen und andererseits die Führung des Schlauches erleichtern.

Insbesondere für einlagige, thermoplastische Kunststoffschläuche sieht eine spezielle Ausführungsvariante vor, dass der Roboter eine Schlauchherstellungsdüse aufweist. Dies erlaubt es, den am Roboter hergestellten Schlauch optimal temperiert direkt in die Form einzulegen.

Versuche haben gezeigt, dass das erfindungsgemäße Verfahren, vor allem für Schläuche aus Polyamidmaterial geeignet ist.

Positive Erfahrungen wurden sowohl mit einlagigen als auch mit mehrlagigen Schläuchen erzielt.

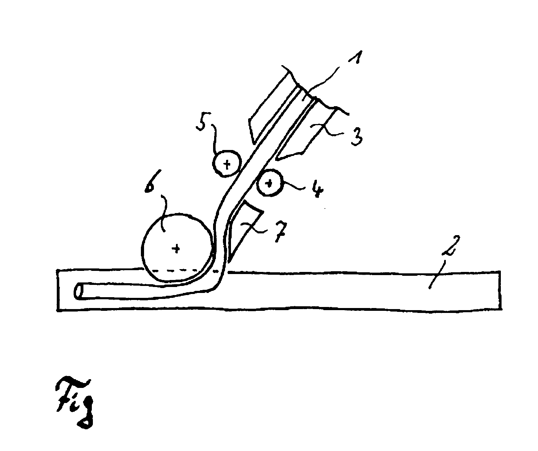

Ein Ausführungsbeispiel zur exemplarischen Darstellung des Einlegens eines Polyamidschlauches mittels eines Roboters in eine Form, ist in der Figur grob schematisch dargestellt.
- Die Figur zeigt: einen Kunststoffschlauch aus Polyamid, der ein- oder mehrlagig ausgebildet ist.

Dieser Schlauch 1 wird mittels Heiz- und Führungselementen eines Roboters in eine Form 2 eingelegt. Zu diesen Heiz- und Führungselementen des Roboters zählt zunächst eine Heizeinrichtung 3, die als Heißluftbegleitheizung ausgebildet sein kann. Weiterhin dienen der Führung zwei Rollen 4 und 5, die jeweils eine an die Form des Schlauches angepasste, konkave Rollenoberfläche aufweisen. Im Verlauf der Schlauchführung wird der Polyamidschlauch zwischen einer weiteren Rolle 6 und einem Gleitstein 7 geführt, bevor er in der Form 2 abgelegt ist. Die Rolle 6 ist hierbei derart ausgebildet und positioniert, dass sie den Schlauch mit einer vordefinierten Kraft in die Form eindrückt.

Die Heiz- und Positioniereinrichtungen 3 bis 7 sind mittels eines Roboters (nicht gezeigt) derart relativ zur Form 2 bewegbar, dass mit ihnen der Schlauch 1 vorsichtig und genau positioniert in die Form 2 eingelegt wird.

Bei einer feststehenden Form 2 kann der Roboter den Schlauch je nach Form in drei Dimensionen bewegen, um den Schlauch auch in komplizierte Schlauchformen einlegen zu können.

Beim Einlegen hat der Schlauch eine Temperatur von etwa 170 °C. Der Schlauch wird anschließend druckverformt und durch eine weitere Temperaturerhöhung thermofixiert. Da der Schlauch bereits eine Temperatur von etwa 170 °C aufweist, kann die Thermofixierzeit reduziert werden.

## Patentansprüche

1. Verfahren zur Herstellung eines thermoplastischen Kunststoffschlauches (1), bei dem der Schlauch (1) vorgewärmt, in eine Form (2) eingelegt, druckverformt und anschließend thermofixiert wird, ***dadurch gekennzeichnet, dass*** der Schlauch (1) auf circa 150 °C bis 190 °C vorgewärmt wird und mit einem Roboter in die Form (2) eingelegt wird.

2. Verfahren nach Anspruch 1, ***dadurch gekennzeichnet, dass*** der Schlauch auf circa 170 °C vorgewärmt wird.

3. Verfahren nach Anspruch 1 oder 2, ***dadurch gekennzeichnet, dass*** der Schlauch (1) mit einer Rolle (6) in die Form eingelegt wird.

4. Verfahren nach einem der vorhergehenden Ansprüche, ***dadurch gekennzeichnet, dass*** der Schlauch mit einer oder mehreren Rollen (4, 5) geführt wird.

5. Verfahren nach einem der vorhergehenden Ansprüche, ***dadurch gekennzeichnet, dass*** der Schlauch (1) zwischen einer Rolle (6) und einem Gleitstein (7) geführt wird.

6. Verfahren nach einem der vorgehenden Ansprüche, ***dadurch gekennzeichnet, dass*** der Schlauch beim Einlegen in die Form (2) erwärmt wird.

7. Verfahren nach einem der vorhergehenden Ansprüche, ***dadurch gekennzeichnet, dass*** der Schlauch beim Einlegen in die Form mit Heißluft beaufschlagt wird.

8. Verfahren nach einem der vorhergehenden Ansprüche, ***dadurch gekennzeichnet, dass*** der Schlauch ein Polyamidschlauch ist.

9. Verfahren nach einem der vorhergehenden Ansprüche, ***dadurch gekennzeichnet dass,*** der Schlauch mehrlagig ist.
